# EUROPEAN PATENT APPLICATION

(11) **EP 2 317 471 A1**
(43) Date of publication of application: **04.05.2011**
(21) Application number: 10186448.6
(22) Date of filing: 04.10.2010
(51) Int. Cl.: G06T 7/00, G06K 9/20, H04N 5/272

(54) **An automated test method including transparent black regions**

(30) Priority: 16.10.2009 TR 200907868
(71) Applicant: Vestel Elektronik Sanayi ve Ticaret A.S., 45030 Manisa (TR)
(72) Inventor: Onder, Devrim, 45030, Manisa (TR)
(74) Representative: Cayli, Hülya

(57) **Abstract**

The invention disclosed in the present invention is based on an automated test method which compares images by utilizing black transparent regions. In the said method, a template image that contains foreground and background is prepared, and a mask image is prepared by the testers wherein the foreground information are shown as white pixels and background information are shown as black pixels. Then, foreground segmentation is performed by determining the values of the foreground pixels of the template and the mask. Finally, foreground comparison is made in view of the target test image and the foreground of the template. Apart from the above listed steps, the present method also comprises a background control step wherein it is checked whether any foreground information exists or not.

## Description

### Technical Field

The present invention relates to an automated test method that performs image comparison between the images including black transparent regions in video images.

### Prior Art

Today, it is observed that most image processing and testing methods are manually performed. The main disadvantage of the manual test approach is time consumption. Since there are a lot of steps to be applied during these tests, verification of each commercial product takes a huge amount of time. There are several disadvantages of the tests of the prior art such as tester dependency due to the non automated tests, the number of test steps, difficulty of performing the tests at desired times and need for tester intervention as tests are performed manually.

On the other hand, the best way to check the competency of each new software release or product modification and to detect any drawback that occurred during the tests is testing them in a test environment. This approach increases the need for tests. Additionally, testing is an essential application for ever-developing companies and various studies regarding this subject are available.

Most of the image comparison tests of the prior art compares the image by calculating the pixel values at certain regions of the image. For instance, the international patent application No WO 2007/051992 discloses an image processing method. The said method computes and compares the statistical distribution of the predetermined pixel alignments in at least one part of the image under test and the distribution of pixel alignments among neighboring groups. This comparison is performed so as to detect a similarity between the image under test and the one or more other images. In the prior art, most of the patent applications regarding image processing are based on computation and comparison of the statistical distribution of color values of the pixels in a certain region.

US Patent application No 2009102771 discloses an image processing method and system. The said image processing method is performed in five steps: detection, generation, mask processing, frame division and gray scale conversion. First, a detection which comprises detecting the motion indexes of the input frames on the image taken from the real image is carried out for each pixel. Then, a masking signal is generated for a fluctuation pixel region in the motion index. After that, the input frame is divided, over the unit frame, into multiple sub-frames. On the basis of the luminance signal, adaptive grayscale conversion is performed in a pixel region where a motion index is larger than a predetermined threshold value. The said invention is based on computation and comparison of luminance values in a certain region. Therefore, it differs from the present invention which is intended for testing the images by particularly utilizing the black transparent regions.

### Brief Description of the Invention

The present invention discloses an image comparison test method which is carried out by utilizing black transparent regions. The test method including black transparent regions is used for the purpose of automated testing of the images. Most of the widely known test methods could not be automated due to several technical reasons.

The present invention enables automated testing by including black transparent regions. An image is captured in the said method, and the transparent regions on the image are marked on the region that is desired to be tested. Then, mask and template image are generated by the testers. According to this method, the image is segmented as background and foreground. The template image includes only the foreground information. The test method of the present invention is applied on the foreground information only. According to the method, the foreground information in the test images is automatically compared with the foreground information in the template image; and the test fails if they do not match, otherwise it means that the product passes the test. Since only the foreground information is tested in the said method, no comparison is made over background information. However, the present test method also comprises background control step wherein it is checked whether any tones or colors are present on the background. Detecting no tonal or color information on the background does not adversely 598/EP affect the testing process; and detecting such information on the background refers to failure of the test.

The method of the invention can be easily integrated into any systems. This invention yields faster and more reliable results since it is independent from the video contents in the image and it does not need user intervention during image comparison.

### The objective of the Invention

The aim of the present invention is to provide an automated test method including black transparent regions for use in image comparison.

Another aim of this invention is to develop a method which ensures that the tests are performed quicker since it is automated.

### Description of the Figures

An example belonging to the test method including black transparent regions which is intended for image comparison is illustrated in the annexed figures wherein;
Figure 1 is an exemplary image captured from the target test image.
Figure 2 is an exemplary template image of an embodiment of the test method including black transparent region.
Figure 3 is an exemplary image obtained by means of a different test method.
Figure 4 is an exemplary mask image of an embodiment of the test method including black transparent region.
Figure 5 is an exemplary template image of an embodiment of the foreground segmentation of the test method including black transparent region.

The parts in the figures are individually given a reference number and the corresponding meanings of the references are as follows:

| | |
|---|---|
| Transparent regions | (11) |
| Video image | (12) |
| Template image | (2) |
| Transparent region | (21) |
| Foreground (F) | (22) |
| Template image for a different test | (3) |
| Transparent region | (31) |
| Foreground (F) | (32) |
| Mask image | (4) |
| Foreground (white pixels) | (41) |
| Background (black pixels) | (42) |
| Compared template image | (5) |
| Foreground information (shown in white, but in its original color) | (51) |
| Background information | (52) |

### Disclosure of the Invention

The present invention includes a test method developed by preparing black transparent regions for image comparison. The method in question is comprised of the following five steps:
1. Preparing a template image
2. Preparing a mask image
3. Foreground segmentation
4. Foreground comparison
5. Background control

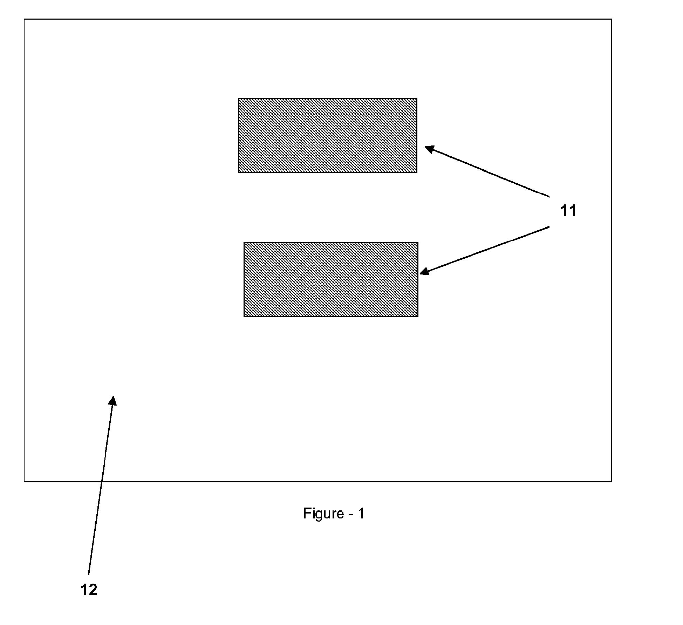

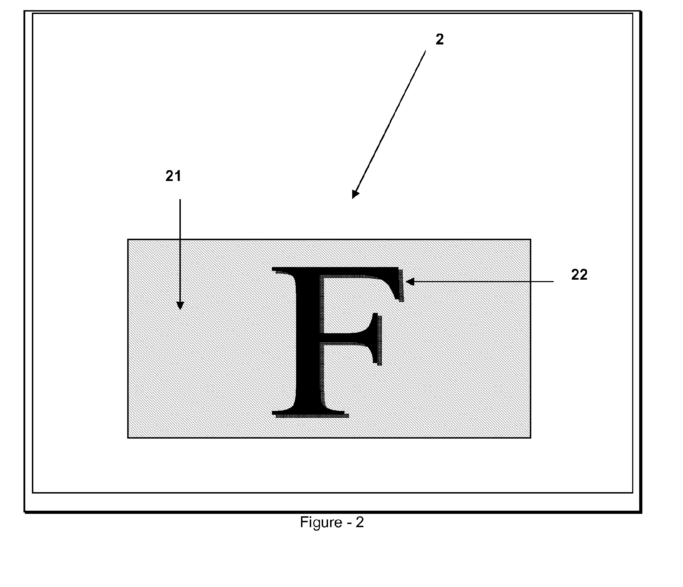

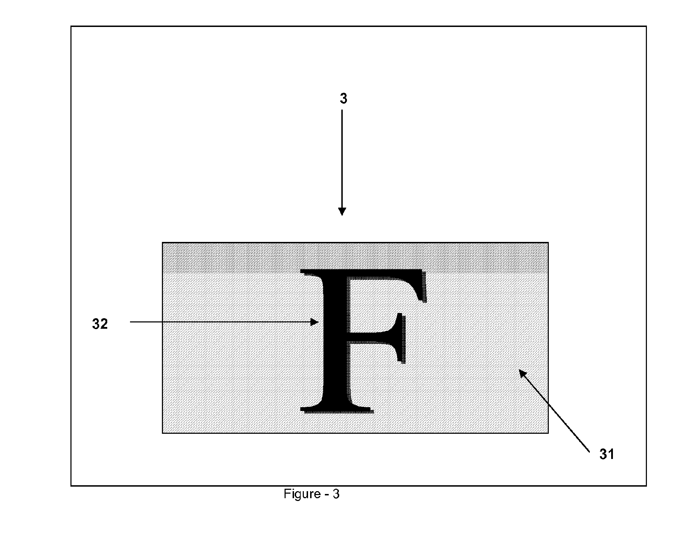

First of all, an image is captured from the target test image DTG MHEG (Multimedia and Hypermedia Experts Group). This captured image is a test image of DVB-T (Digital Video Broadcasting-Terrestrial) product, and matches with the template image. A template image (2, 3) is prepared by removing the video content on the said captured image (illustrated in Figure 2 and Figure 3). The said template image (2, 3) can be easily obtained by hiding video information or by disconnecting video line. The course of obtaining the template image varies according to test environment and the product used. An exemplary image captured from the target test image is shown in Figure 1. Some regions are illustrated as black transparent (11) in Figure 1, and the rest of the region remains unmodified and is illustrated in white. However, image comparison is not performed pixel by pixel in this state. This is because transparent regions (11) still has video images (12) and video information. Thus, the test environment needs to be specified a bit more. To this end, a mask image (4) is created and the region to be processed is identified.

Figure 2 shows an exemplary template image of an embodiment of the test method including black transparent regions. The transparent region (21) is illustrated with slashes from left top to right bottom. These lines may also be of reverse direction. Figure 3 shows an exemplary test image of an embodiment of a different test method wherein the transparent region (31) in question is illustrated with backslashes from right top to left bottom. The only difference between the two test methods shown in Figure 2 and Figure 3 is the direction of the slashes, no other change is included. These black transparent regions (21, 31) contain trivial information for the test. The "F" letter (22) shown in Figure 2 represents the foreground information of the captured test image. Foreground information is of vital importance since this foreground information (22) is used for the test within the scope of the present invention. All the regions that are excluded from the foreground information are indicated as transparent (21) and they are ignored during testing.

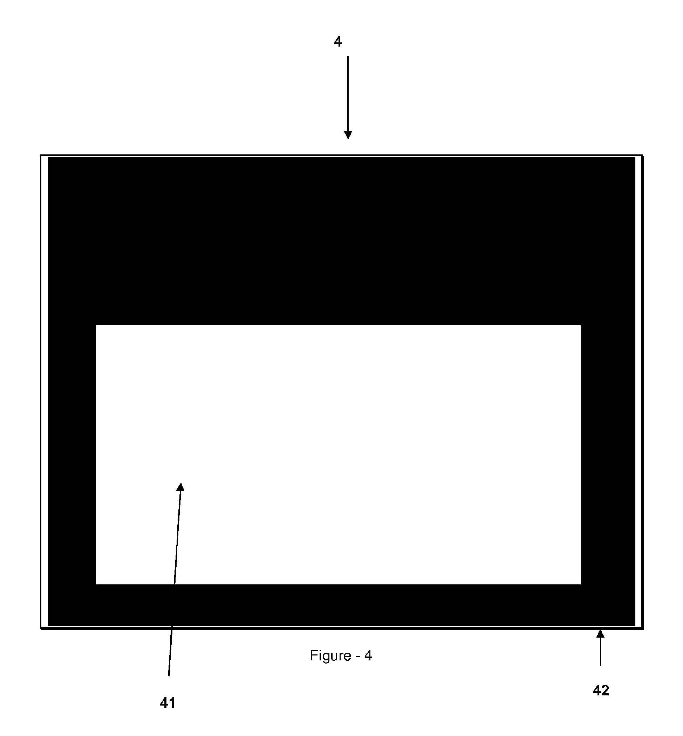

Following the preparation of the template image (2), mask image (4) is prepared. The mask image in question (4) is manually prepared by the testers; and the mask image (4) ensures that the pixels to be handled are determined. In the present invention, all the embodiments of the test method are only performed in the active region on the mask image (4). Figure 4 shows an exemplary mask image (4) of an embodiment of the test method including black transparent regions. Preparing this mask image (4) enhances the precision of the test and ensures that the test is performed faster. The test disclosed within the scope of the present invention makes use of the foreground information (41) that exists in the mask image (4). The pixels (41) which are indicated in white in Figure 4 contain the pixels that pertain to the foreground information with which an image comparison will be performed during testing. The black pixels (42) in the mask image (4) are ignored and not included in the testing.

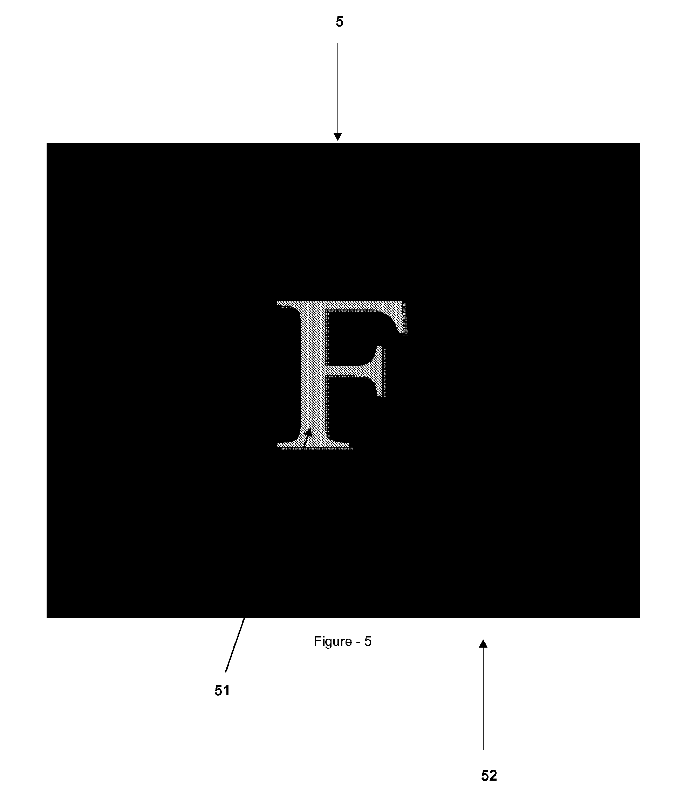

Foreground segmentation is performed in the test method disclosed in the present invention by determining the values of foreground pixels of template (2) and the mask image (4). In the said segmentation, pure black pixels are shown as background (52) since they will be replaced with the video content in real tests. The remaining region contains the foreground information (51) and has its original colors and tones. This is illustrated in Figure 5 wherein the "F" letter, bearing its original color and tone, represents the foreground information (51). In the test method in the scope of the present invention, the image comparison is performed in view of the target test image and the foreground of the template image (5). In order for the test to succeed, the foreground information (51) in the template image (5) must match with the foreground information in the target test image. This match is controlled by comparing the foreground information in template (5) and the target test image only. In other words, if the both foreground information confirm each other, this indicates that the foreground information of the template (5) and of the target image are the same and the test succeeded in this case. Otherwise, it means that the test failed.

Furthermore, a background control is performed. The test disclosed within the scope of the present invention concentrates on the background pixels (52) on the test image which match with the template image (5), and checks whether any foreground information (51) exists or not. The pixels in question (52) may carry video information that is under the black transparent region. Consequently, not only strong tonal information but also color information is allowed. If bright pixels or color pixels are detected on the background, the test fails. Thus, testers can easily realize the errors and testing is performed faster.

## Claims

1. An automated test method for image comparison **characterized in that** it comprises the steps of
• Preparing a template image including background and foreground,
• Preparing a mask image wherein foreground information is displayed as white pixels and background information is displayed as black pixels,
• Segmentation of foreground by determining values of the foreground pixels of the template and the mask,
• Foreground comparison in view of the target test image and the foreground information of template image,
• Background control wherein it is checked whether any foreground information exists or not.

2. A method according to Claim 1 **characterized in that** the lines of the transparent region in the template image are left or right inclined lines.

3. A method according to Claim 1 **characterized in that** the mask image is manually prepared by the testers such that the pixels to be handled are determined.

4. A method according to Claim 1 **characterized in that** the foreground information in template and mask image are used during testing process.

5. A method according to Claim 1 **characterized in that** the background information in template and mask image are not used during testing process.

6. A method according to Claim 1 **characterized in that** the foreground information at the foreground segmentation step exist in their original colors and tones.

7. A method according to Claim 1 **characterized in that** the background information at the foreground segmentation step are shown in black and are replaced with the video content in real tests.

8. A method according to Claim 1 **characterized in that** in the case that the compared foreground information are the same, the test succeeds, and it fails otherwise.

9. A method according to Claim 1 **characterized in that** in the case that any color pixel exists in the background, the test fails.
